(19) Europäisches Patentamt
European Patent Office
Office européen des brevets

(11) EP 4 071 998 A1

(12) EUROPEAN PATENT APPLICATION
published in accordance with Art. 153(4) EPC

(43) Date of publication:
**12.10.2022 Bulletin 2022/41**

(21) Application number: **20896316.5**

(22) Date of filing: **02.12.2020**

(51) International Patent Classification (IPC):
**H02M 7/48** $^{(2007.01)}$

(52) Cooperative Patent Classification (CPC):
**H02M 7/48**

(86) International application number:
**PCT/JP2020/044777**

(87) International publication number:
**WO 2021/112108 (10.06.2021 Gazette 2021/23)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **03.12.2019 JP 2019219012**

(71) Applicant: **Hitachi, Ltd.**
**Tokyo 100-8280 (JP)**

(72) Inventors:
• **KOJIMA, Tetsuo**
  **Tokyo 100-8280 (JP)**
• **OTSUKA, Kuniaki**
  **Tokyo 100-8280 (JP)**
• **HATSUSE, Wataru**
  **Tokyo 100-8280 (JP)**
• **SHIRATA, Hiroyuki**
  **Tokyo 100-8280 (JP)**

(74) Representative: **MERH-IP Matias Erny Reichl Hoffmann**
**Patentanwälte PartG mbB**
**Paul-Heyse-Strasse 29**
**80336 München (DE)**

(54) **PWM INVERTER CONTROL DEVICE AND CONTROL METHOD**

(57) In order to suppress the phenomenon that a motor current jumps when any PWM mode is switched while an inverter is being subjected to PWM control, this PWM inverter control device is provided with: a modulated wave generating circuit for generating a first modulated wave and a second modulated wave on the basis of an output voltage phase command and an output voltage amplitude command; a first and second modulated wave generating circuit for comparing the first modulated wave with a first carrier wave to generate a first PWM pulse, and comparing the second modulated wave with a second carrier wave to generate a second PWM pulse; a PWM mode selecting circuit for generating a PWM mode selecting signal for selecting either of a first or a second PWM mode on the basis of an output frequency command and the output voltage amplitude command, with a timing such that the respective output voltage integrated values when a driving pulse is the first PWM pulse and when the driving pulse is the second PWM pulse match; and a pulse switching circuit which switches between the first and second PWM pulses in accordance with the PWM mode selecting signal and sets the same as the driving pulse.

FIG. 3

EP 4 071 998 A1

**Description**

TECHNICAL FIELD

The present invention relates to a PWM inverter device for driving a three-phase AC load by converting DC voltage into three-phase AC voltage and a control method therefor.

Specifically, the invention relates to a transition technique provided with plural PWM modes and used when switching is made, responding to output voltage and output frequency, between the plural PWM modes.

BACKGROUND ART

Driving an AC motor at variable speed requires conversion of DC power supplied from a DC power source into AC power of a desired frequency and voltage.

Generally, a power conversion device (inverter device) for converting DC power into AC power includes a main circuit using semiconductor switching elements and a control device for controlling semiconductor switching elements. A desired frequency and voltage are obtained by applying pulse width modulation control (PWM control) at a predetermined switching frequency to the semiconductor elements included in the main circuit.

In the field of railroad cars, too, AC motors are driven using power conversion devices (inverter devices) including semiconductor switching elements. However, with such semiconductor switching elements being of a high-withstand-voltage type, it is unavoidable to suppress the switching frequency mainly due to the restriction related with element loss.

For this reason, in the field of railroad cars, a system is generally used in which motors are, in a low-speed range, driven in an asynchronous PWM mode with the drive frequency (inverter frequency) and the switching frequency asynchronous and are, in a high-speed range, driven in a synchronous PWM mode with the drive frequency (inverter frequency) and the switching frequency synchronized. Also, there are many cases in which plural synchronous PWM modes are provided and switching is made between them corresponding to, for example, speed.

However, switching from an asynchronous PWM mode to a synchronous PWM mode or between synchronous PWM modes requires caution, and PWM mode switching, if carried out without any countermeasure taken, a phenomenon of motor current jumping occurs at PWM mode switching.

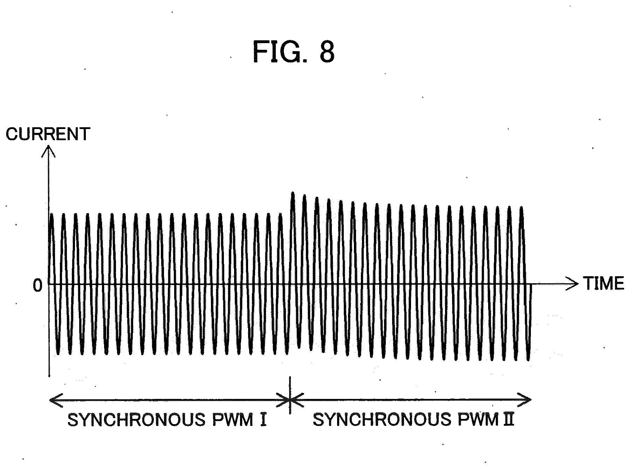

FIG. 8 is a diagram showing an example of motor current waveform jumping at PWM mode switching. When motor current jumping like this occurs, a torque shock occurs to deteriorate the riding comfort of cars. Further, semiconductor switching elements may be broken when maximum allowable currents for them are exceeded.

Various countermeasures have been implemented against such a phenomenon of motor current jumping at PWM mode switching. For example, Patent Literature 1 discloses a technique for suppressing transient variations of the output current of an inverter and for, thereby, reducing effects on the load. According to the technique: in switching the PWM mode for an inverter, switching between an asynchronous mode and a synchronous mode is made such that the pulse width modulation mode is switched earlier for phases having earlier entered a phase angle range where transient variations of the inverter output can be held minimum; and the switching elements included in the inverter are controlled based on either the output from a means of generating an asynchronous pulse width modulation voltage or the output from a means of generating a synchronous pulse width modulation voltage.

CITATION LIST

Patent Literature

Patent Literature 1: Japanese Unexamined Patent Application Publication No. Hei9(1997)-247953

SUMMARY OF INVENTION

Technical Problem

The existing techniques including the one disclosed in Patent Literature 1, lacking fundamental investigation of what causes motor current jumping at PWM mode switching, do not provide drastic countermeasures, so that they cannot be regarded as generally applicable techniques. Namely, they are techniques applicable under specific conditions, for example, for switching between specific PWM modes or in cases involving specific frequencies, modulation percentages, motor constants, or current control responses, and they have been successfully applied only in limited areas.

The present invention is aimed at determining the fundamental cause of motor current jumping at PWM mode switching and providing a generally applicable countermeasure (technique).

Next, the cause of motor current jumping at PWM mode switching will be described.

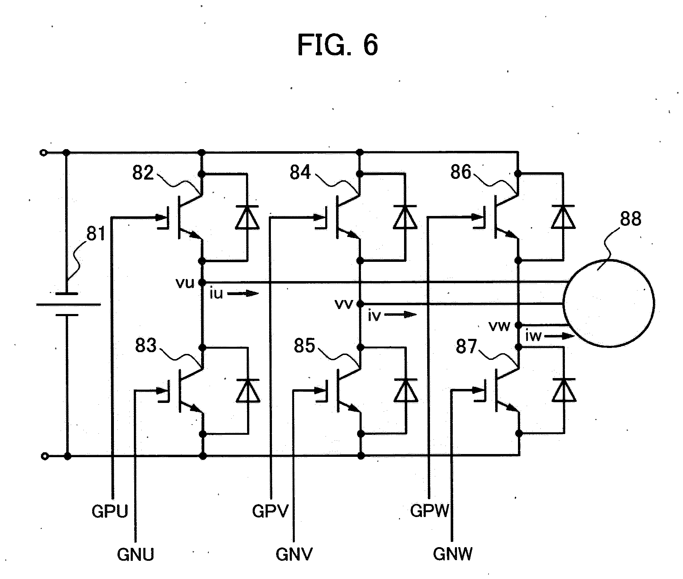

FIG. 6 is a diagram showing an example of a main circuit configuration to be a control target according to the present invention.

The main circuit to be the control target of the present invention shown in FIG. 6 is a power conversion device (inverter device) for converting DC power into AC power and is provided with a smoothing capacitor 81 for stabilizing DC voltage supplied by a DC voltage source (not shown in FIG. 6) and a three-phase bridge which includes a phase-U bridge including a semiconductor switching element 82 of the phase-U upper arm and a semiconductor switching element 83 of the phase-U lower arm, a phase-V bridge including a semiconductor switching element 84 of the phase-V upper arm and a semiconductor switching element 85 of the phase-V lower arm, and a phase-W bridge including a semiconductor switching element 86 of the phase-W upper arm and a semiconductor switching element 87 of the phase-W lower arm. The input to the three-phase bridge is parallel-connected to the smoothing capacitor 81, and the outputs from the three-phase bridge are connected to an AC motor 88.

Gate pulse signals GPU, GPV, and GPW inputted to the upper arms of the three-phase bridge drive the semiconductor switching elements 82, 84, and 86 of the upper arm of the three-phase bridge. The gate pulse signals GNU, GNV, and GNW inputted to the lower arm of the three-phase bridge drive the semiconductor switching elements 83, 85, and 87 of the lower arm of the three-phase bridge.

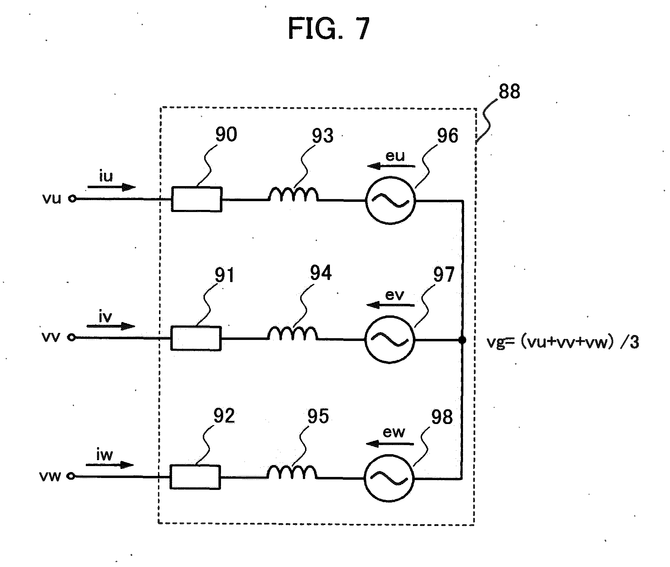

FIG. 7 is a diagram showing an equivalent circuit of the motor 88 (AC motor 88) that is an example load to be a control target of the present invention.

Referring to FIG. 7, phase-U voltage vu is connected to a neutral-point potential vg via resistance 90, inductance 93, and an equivalent power supply 96 simulating a speed electromotive force eu. Similarly, phase-V voltage vv is connected to the neutral point potential vg via resistance 91, inductance 94, and an equivalent power supply 97 simulating a speed electromotive force ev, and phase-W voltage vw is connected to the neutral point potential vg via resistance 92, inductance 95, and an equivalent power supply 98 simulating a speed electromotive force ew.

In the following, the cause of motor current jumping at PWM mode switching will be described using equations.

As expressed by [Equation 1], the average value of the output voltages of the three-phase inverter equals the neutral point potential vg of the motor 88.

$$[\text{Equation 1}] \quad vg = (vu + vv + vw)/3$$

Next, magnetic fluxes $\varphi u$, $\varphi v$, and $\varphi w$ of the motor 88 are expressed by [Equation 2] where s represents a Laplace operator and 1/s represents integration. Concerning the motor 88, the speed electromotive forces are represented by eu, ev, and ew, the motor currents are represented by iu, iv, and iw, and resistance is represented by R.

$$[\text{Equation 2}] \quad \varphi u = (vu - vg - eu - R \times iu)/s$$
$$\varphi v = (vv - vg - ev - R \times iv)/s$$
$$\varphi w = (vw - vg - ew - R \times iw)/s$$

When the inductance of the motor 88 is represented by L, the motor currents iu, iv, and iw are expressed by [Equation 3].

$$[\text{Equation 3}] \quad iu = \varphi u/L$$
$$iv = \varphi v/L$$
$$iw = \varphi w/L$$

This follows that jumping of motor currents iu, iv, and iw is equivalent to jumping of magnetic fluxes $\varphi u$, $\varphi v$, and $\varphi w$. Other than the output voltages vu, vv, and vw of the three-phase inverter and vg, no external factors contribute to the jumping of the magnetic fluxes $\varphi u$, $\varphi v$, and $\varphi w$, so that only they need to be extracted for consideration. By extracting the terms vu, vv, and vw representing the output voltages of the three-phase inverter and vg only from [Equation 2], definitional equations for output voltage integral values $\Phi u$, $\Phi v$, and $\Phi w$ of the three-phase inverter can be expressed as [Equation 4].

$$[\text{Equation 4}] \quad \Phi u = (vu - vg)/s$$

$$\Phi v = (vv - vg)/s$$

$$\Phi w = (vw - vg)/s$$

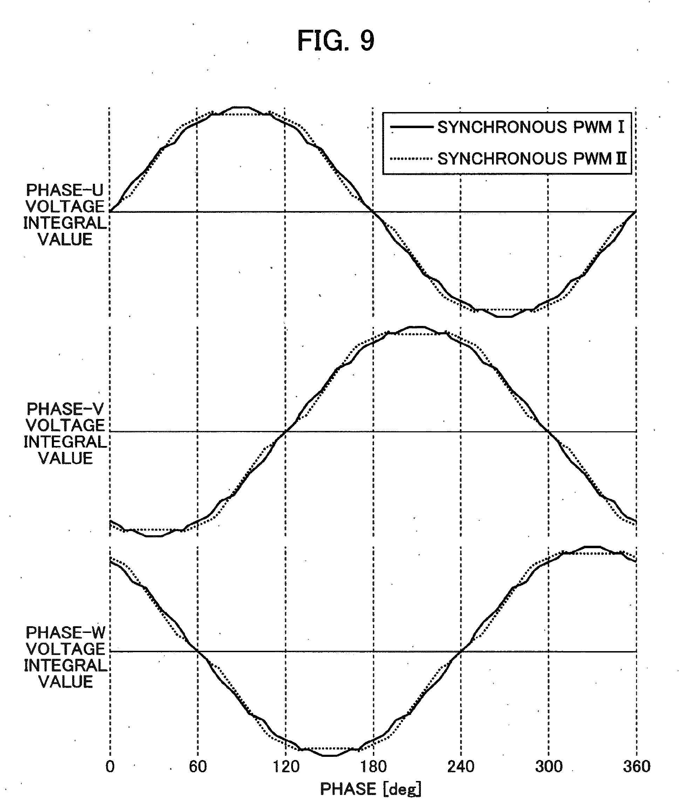

FIG. 9 is a diagram showing voltage integral values Φu, Φv, and Φw calculated based on the definitional equations for two synchronous PWM modes, i.e. synchronous PWMI and synchronous PWMII. Between the synchronous PWMI and PWMII, the output frequency, output voltage amplitude, and output voltage phase are identical and only the number of synchronization pulses differs. Between the two voltage integral values, the magnitude of the fundamental wave component is identical, but the harmonic component differs, so that the curves of the two voltage integral values do not completely match. However, since what are involved are alternating quantities, the curves of the two voltage integral values inevitably cross each other at the timing of zero-crossing.

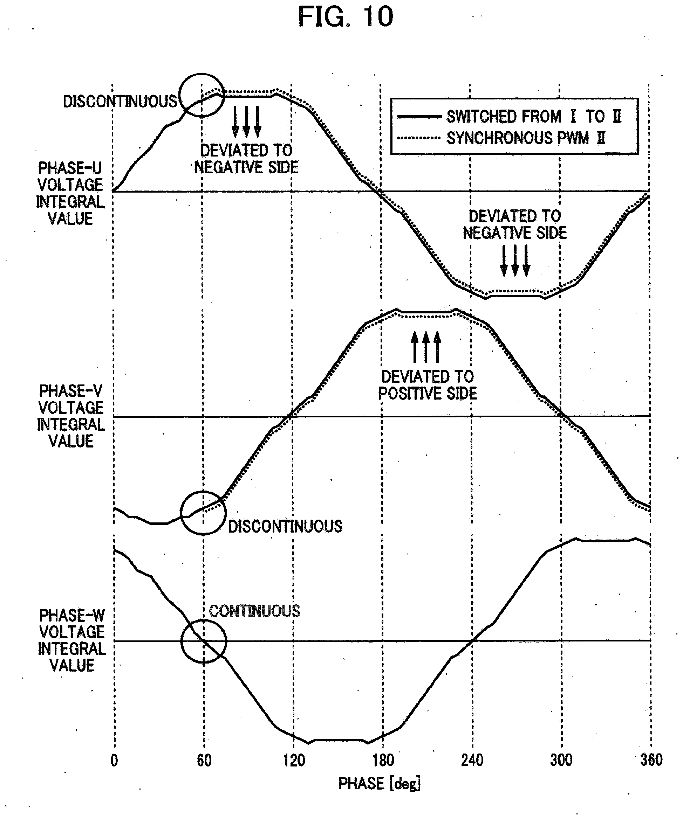

FIG. 10 is a diagram showing the output voltage integral values when the synchronous PWM mode is switched.

In FIG. 10, the solid-line curves represent the voltage integral values in a case where switching is made from the synchronous PWMI to the synchronous PWMII at a phase angle of 60 degrees. For comparison purposes, the voltage integral values in the synchronous PWMII are represented by the dotted-line curves. In phase W, the voltage integral values completely match at the phase angle of 60 degrees (namely, with the curves completely overlapping, the curve for the synchronous PWMII (dotted-line curve) cannot be recognized.

On the other hand, for phases U and V, with the PWM mode switched without the voltage integral values matching, the solid-line curves are unidirectionally deviated with respect to the curves of the voltage integral values in the synchronous PWMII. As shown, deviation to the negative side is observed for phase U and to the positive side for phase V. Thus, when switching is made between PWM modes and a phase where the voltage integral values do not match between the PWM modes, the difference between the voltage integral values remains without being removed even if the waveforms in the PWM modes are identical after PWM mode switching. This follows that, when voltage integral values Φu and Φv deviate, magnetic fluxes φu and φv deviate, causing motor currents iu and iv to also deviate.

Why motor current jumping occurs when the PWM mode is switched has been described in detail above.

Even when voltage integral values Φu, Φv, and Φw deviate at PWM mode switching causing motor currents iu, iv, and iw to also deviate, the imbalanced state is removed naturally, as the magnetic fluxes φu, φv and φw of the motor are affected by the motor currents iu, iv, and iw.

However, the time constant required before motor current jumping disappears is inversely proportional to the resistance R of the motor, besides, in recent years, motor improvement toward higher efficiency and lower loss has been promoted. As a result, the motor resistance R has become smaller and, therefore, the time constant has become larger. Namely, motor current jumping at PWM mode switching has come to be lengthened to magnify the problem.

Solution to Problems

To solve the problem, the PWM inverter control device according to the present invention typically includes: a modulated wave generation circuit which generates, based on an output voltage phase command and an output voltage amplitude command for a PWM inverter, a first modulated wave corresponding to a first PWM mode and a second modulated wave corresponding to a second PWM mode; a first pulse generation circuit which generates a first PWM pulse by comparing the first modulated wave and a carrier wave corresponding to the first PWM mode; a second pulse generation circuit which generates a second PWM pulse by comparing the second modulated wave and a carrier wave corresponding to the second PWM mode; a PWM mode selection circuit which generates a PWM mode selection signal for selecting, based on an output frequency command and the output voltage amplitude command for the PWM inverter, one of the first PWM mode and the second PWM mode; and a pulse switching circuit which makes switching, according to the PWM mode selection signal, between the first PWM pulse and the second PWM pulse for output as a PWM inverter drive pulse. The PWM mode selection circuit generates the PWM mode selection signal at timing when an output voltage integral value of the PWM inverter in a case where the first PWM pulse is used as the drive pulse and an output voltage integral value of the PWM inverter in a case where the second PWM pulse is used as the drive pulse match.

Advantageous Effects of Invention

According to the present invention, in PWM-controlling an inverter, the phenomenon of motor current jumping occurring when switching is made between any PWM modes can be suppressed.

BRIEF DESCRIPTION OF DRAWINGS

FIG. 1 is a diagram showing an example of a control device for a three-phase PWM inverter according to a first embodiment of the present invention.

FIG. 2 is a diagram showing an example configuration of a PWM mode selection circuit according to the first embodiment.

FIG. 3 is a diagram showing an example of a control device for a three-phase PWM inverter according to a second embodiment of the present invention.

FIG. 4 is a diagram showing an example configuration of a PWM mode selection circuit according to the second embodiment.

FIG. 5 is a diagram showing another example configuration of the PWM mode selection circuit according to the second embodiment.

FIG. 6 is a diagram showing an example of a main circuit configuration to be a control target of the present invention.

FIG. 7 is a diagram showing an equivalent circuit of an AC motor as an example load to be a control target of the present invention.

FIG. 8 is a diagram showing an example of motor current waveform jumping at PWM mode switching observed when existing techniques are used.

FIG. 9 is a diagram showing output voltage integral values in two synchronous PWM modes.

FIG. 10 is a diagram showing output voltage integral values when the synchronous PWM mode is switched.

FIG. 11 is a diagram showing operation examples (output voltage integral values) according to the second embodiment of the present invention.

FIG. 12 is a table listing modulation percentage correction amounts for each phase.

FIG. 13 is a diagram showing a motor current waveform in a case where the present invention is applied.

DESCRIPTION OF EMBODIMENTS

In the following, as forms of implementation of the present invention, first and second embodiments will be described with reference to drawings.

[First Embodiment]

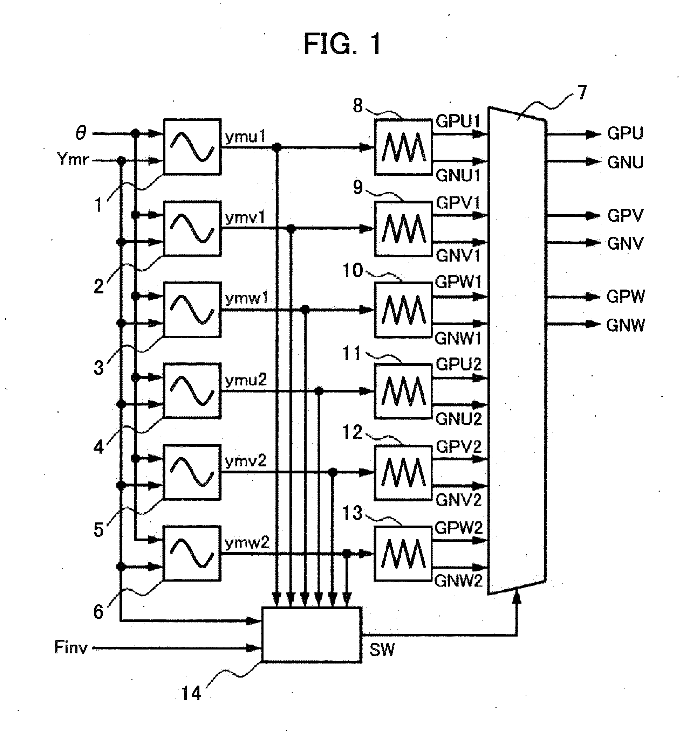

FIG. 1 is a diagram showing an example of a control device for a three-phase PWM inverter according to a first embodiment of the present invention.

The PWM inverter control device shown in FIG. 1 is provided with the following components.

- Modulated wave generation circuits 1, 2, and 3 which generate, corresponding to the first PWM mode, three-phase modulated waves based on output voltage phase command θ and output voltage amplitude command Ymr, the three phases being ±120 degrees apart
- Modulated wave generation circuits 4, 5, and 6 which generate, corresponding to the second PWM mode, three-phase modulated waves based on output voltage phase command θ and output voltage amplitude command Ymr, the three phases being ±120 degrees apart
- Pulse generation circuits 8, 9, and 10 which receive outputs of the modulated wave generation circuits 1, 2, and 3, compare the received outputs with the carrier waves corresponding to the first PWM mode, and, respectively, output gate pulse signals GPU1 and GNU1, GPV1 and GNV1, and GPW1 and GNW1
- Pulse generation circuits 11, 12, and 13 which respectively receive outputs of the modulated wave generation circuits 4, 5, and 6, compare the received outputs with the carrier waves corresponding to the second PWM mode, and, respectively, output gate pulse signals GPU2 and GNU2, GPV2 and GNV2, and GPW2 and GNW2
- PWM mode selection circuit 14 which outputs PWM mode selection signal SW based on output voltage amplitude command Ymr and output frequency command Finv
- Pulse switching circuit 7 which, based on the PWM mode selection signal SW, outputs gate pulse signals GPU to GNW for the PWM inverter by switching the outputs of the pulse generation circuits 8, 9, and 10 and pulse generation circuits 11, 12, and 13

Next, example operations corresponding to the first PWM mode of the modulated wave generation circuits 1, 2, and 3 will be described.

The modulated wave generation circuits 1, 2, and 3 respectively generate, as represented by [Equation 5], three-phase modulated waves ymu1, ymv1, and ymw1 by calculating modulated wave amplitude a1 using function A1 based on output voltage amplitude command Ymr, then calculating the products of the modulated wave amplitude a1 and sin functions in phases ±120 degrees apart with respect to the output voltage phase command θ.

$$[\text{Equation 5}] \quad a1 = A1(Ymr)$$

$$ymu1 = a1 \times \sin(\theta)$$

$$ymv1 = a1 \times \sin(\theta - 2\pi/3)$$

$$ymw1 = a1 \times \sin(\theta + 2\pi/3)$$

For function A1, where the number of pulses in the first PWM mode is adequately large and the output voltage amplitude command Ymr is sinusoidally modulated (where not over-modulated, i.e. in a non-saturated region), by regarding the modulated wave amplitude a1 as proportional to the output voltage amplitude command Ymr, approximation can be made as a1 = Al(Ymr) ≈ 4/π × Ymr.

However, in an over-modulated region where modulated waves saturate, linear approximation does not hold, and the relation between the modulated wave amplitude a1 and the output voltage amplitude command Ymr becomes non-linear, so that the non-linear characteristic is implemented as function A1.

Regarding the power conversion devices (inverter devices) targeted by the present invention, there are cases where approximation does not hold even in a sinusoidal modulation region due to an inadequate number of pulses. In such cases, the relation between the modulated wave amplitude a1 and the actual output voltage amplitude calculated by Fourier integration of the actual PWM waveform in the first PWM mode is determined, and the inverse function is implemented as the function A1.

Similarly, the modulated wave generation circuits 4, 5, and 6 corresponding to the second PWM mode respectively generate, as represented by [Equation 6], three-phase modulated waves ymu2, ymv2, and ymw2 by calculating modulated wave amplitude a2 using function A2 based on output voltage amplitude command Ymr, then calculating the products of the modulated wave amplitude a2 and sin functions in phases ±120 degrees apart with respect to the output voltage phase command θ.

$$[\text{Equation 6}] \quad a2 = A2(Ymr)$$

$$ymu2 = a2 \times \sin(\theta)$$

$$ymv2 = a2 \times \sin(\theta - 2\pi/3)$$

$$ymw2 = a2 \times \sin(\theta + 2\pi/3)$$

The function A2 is calculated similarly to the function A1.

The pulse generation circuits 8, 9, and 10 corresponding to the first PWM mode respectively receive the three-phase modulated waves ymu1, ymv1, and ymw1 of the first PWM mode, compare the received three-phase modulated waves with the carrier waves corresponding to the first PWM mode, and output PWM gate pulse signals GPU1 and GNU1, GPV1 and GNV1, and GPW1 and GNW1. Generally, the carrier wave phases of the pulse generation circuits 8, 9, and 10 are identical.

The gate pulse signals of each of the three phases, i.e., GPU1 and GNU1 of phase U, GPV1 and GNV1 of phase V, and GPW1 and GNW1 of phase W are complementary signals alternately turning on to keep an on state except during each dead time for arm-shorting prevention (a period with both off).

The pulse generation circuits 11, 12, and 13 corresponding to the second PWM mode receive the three-phase modulated waves ymu2, ymv2, and ymw2 of the second PWM mode, compare the received three-phase modulated waves with the carrier waves corresponding to the second PWM mode, and output PWM gate pulse signals GPU2 and GNU2, GPV2 and GNV2, and GPW2 and GNW2.

Like in the case of the pulse generation circuits 8, 9, and 10, generally, the carrier wave phases of the pulse generation circuits 11, 12, and 13 are identical, and the gate pulse signals of each of the three phases, i.e., GPU2 and GNU2 of phase U, GPV2 and GNV2 of phase V, and GPW2 and GNW2 of phase W are complementary signals alternately turning on to keep an on state except during each dead time for arm shorting prevention (a period with both off).

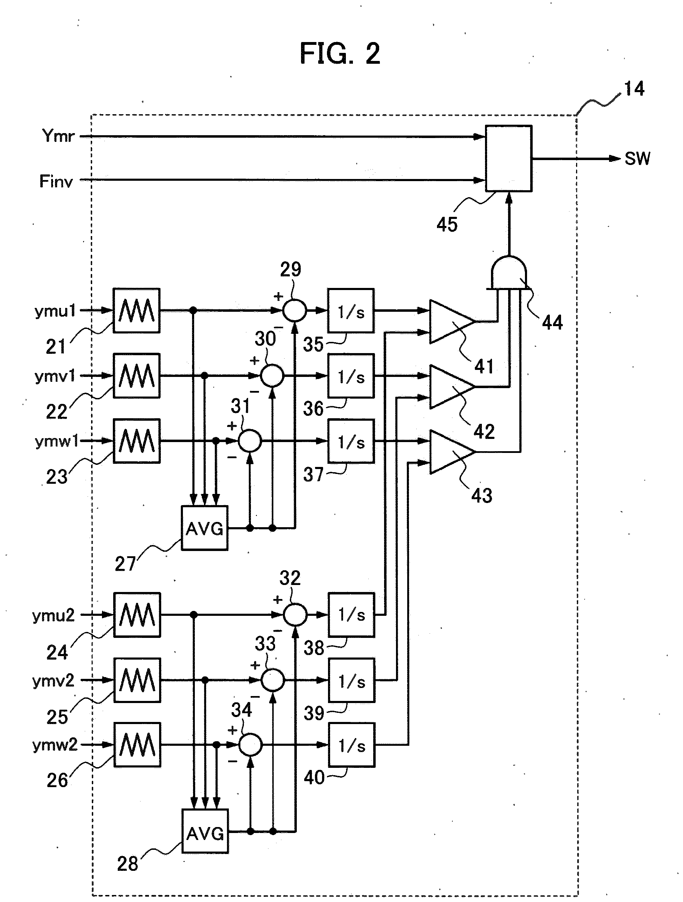

FIG. 2 is a diagram showing an example configuration of the PWM mode selection circuit 14 according to the first embodiment.

The PWM mode selection circuit 14 shown in FIG. 2 is provided with the following components.

- PWM waveform calculators 21, 22, and 23 which receive the three-phase modulated waves ymu1, ymv1, and ymw1 of the first PWM mode and respectively output the first PWM waveforms
- PWM waveform calculators 24, 25, and 26 which receive the three-phase modulated waves ymu2, ymv2, and ymw2 of the second PWM mode and respectively output the second PWM waveforms
- Average calculator 27 which receives outputs of the PWM waveform calculators 21, 22, and 23 and calculates an average value of the first PWM waveforms
- Average calculator 28 which receives outputs of the PWM waveform calculators 24, 25, and 26 and calculates an average value of the second PWM waveforms
- Subtractors 29, 30, and 31 which subtract the output of the average calculator 27 from the outputs of the PWM waveform calculators 21, 22, and 23
- Subtractors 32, 33, and 34 which subtract the output of the average calculator 28 from the outputs of the PWM waveform calculators 24, 25, and 26
- Integrators 35, 36, and 37 which respectively integrate the outputs of the subtractors 29, 30, and 31
- Integrators 38, 39, and 40 which respectively integrate the outputs of the subtractors 32, 33, and 34
- Comparators 41, 42, and 43 which respectively compare the outputs of the integrators 35, 36, and 37 and the outputs of the integrators 38, 39, and 40, and which respectively output TRUE either when the output values of each pair of corresponding integrators between the integrators (35, 36, and 37) on the first PWM mode side and the integrators (38, 39, and 40) on the second PWM mode side match or when output value differences between them are within an allowable range or which otherwise respectively output FALSE
- Logical product (AND) gate 44 which obtains a logical product of the outputs of the comparators 41, 42, and 43
- PWM mode selection signal generator 45 which outputs the PWM mode selection signal SW according to the output voltage amplitude command Ymr, the output frequency command Finv and the output of the logical product gate 44

When the output of the logical product gate 44 is TRUE, the PWM mode selection signal generator 45, based on the output voltage amplitude command Ymr and the output frequency command Finv, outputs, after switching the mode selection, the PWM mode selection signal SW for selecting the first PWM mode or the second PWM mode. The region of transition between the two PWM modes includes a hysteresis width so as to prevent switching from either PWM mode and back to the PWM mode in a short period of time.

As described above, in the process of switching the PWM mode selection signal SW, when the output of the logical product gate 44 is TRUE is when the outputs of the comparators 41, 41, and 43 are all TRUE. Namely, it is either when the integral values (i.e., voltage integral values) of the first PWM waveforms corresponding to the first PWM mode and the integral values (i.e., voltage integral values) of the second PWM waveforms corresponding to the second PWM mode match in all the three phases or when differences between them are within an allowable range. Hence, motor current jumping at PWM mode switching can be suppressed.

[Second Embodiment]

Next, the second embodiment of the present invention will be described.

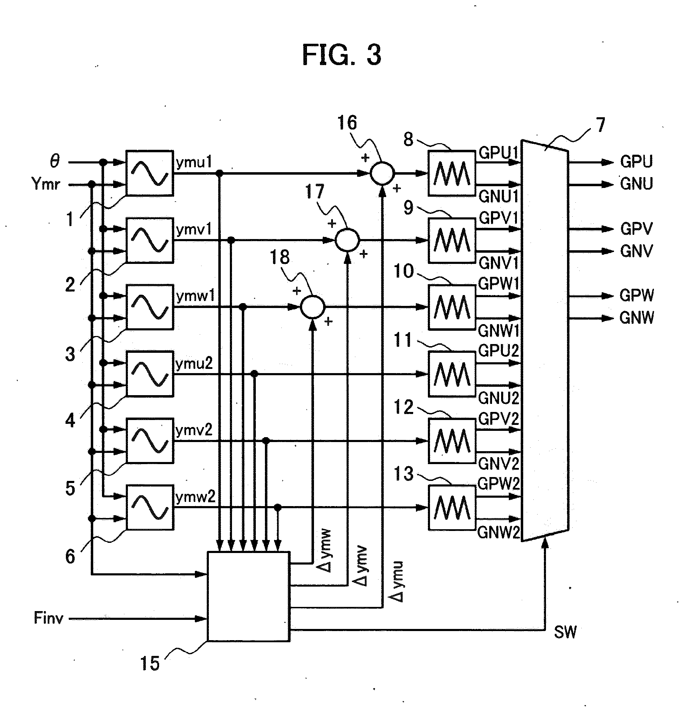

FIG. 3 is a diagram showing an example of a control device for a three-phase PWM inverter according to the second embodiment of the present invention.

The PWM inverter control device shown in FIG. 3 is provided with the following components. In the following, the description of the same components as those of the control device for a three-phase PWM inverter according to the first embodiment shown in FIG. 1 will be omitted and only the components different from those of the first embodiment will be described.

- PWM mode selection circuit 15 which outputs, based on the output voltage amplitude command Ymr and the output frequency command Finv, the PWM mode selection signal SW and modulation percentage correction amounts Δymu, Δymv, and Δymw
- Adders 16, 17, and 18 which respectively add modulation percentage correction amounts Δymu, Δymv, and Δymw outputted from the PWM mode selection circuit 15 to outputs ymu1, ymv1, and ymw1 of the modulated wave generation circuits 1, 2, and 3

The pulse generation circuits 8, 9, and 10 respectively receive, not outputs ymu1, ymv1, and ymw1 of the modulated wave generation circuits 1, 2, and 3, but the outputs of the adders 16, 17, and 18, compare the received outputs with the carrier waves corresponding to the first PWM mode, and output gate pulse signals GPU1 and GNU1, GPV1 and GNV1, and GPW1 and GNW1.

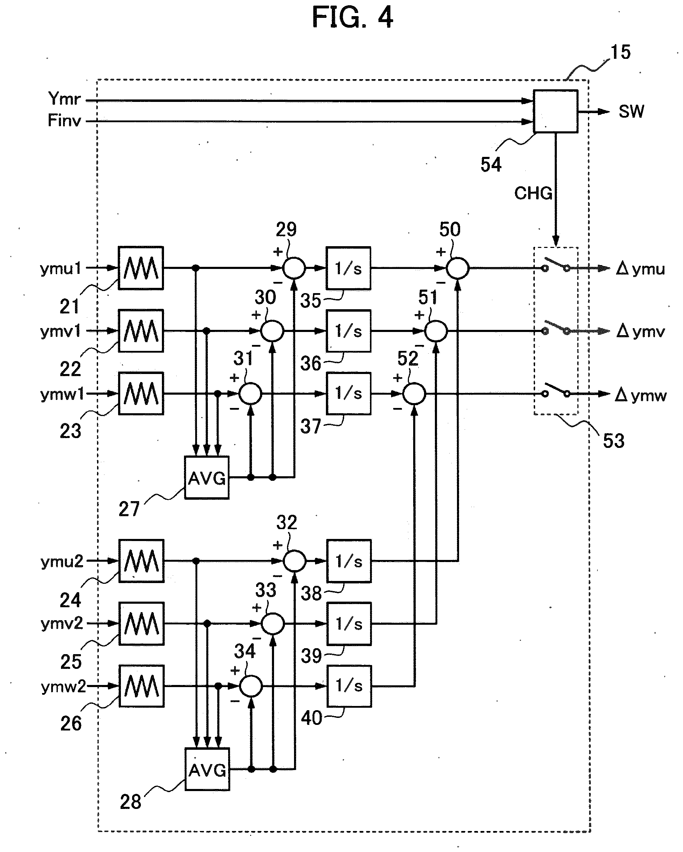

FIG. 4 is a diagram showing an example configuration of the PWM mode selection circuit 15 according to the second embodiment.

In the following, the components of the PWM mode selection circuit 15 shown in FIG. 4 will be described, excluding parts identical to those included in the PWM mode selection circuit 14 according to the first embodiment shown in FIG. 2.

- Subtractors 50, 51, and 52 which respectively calculate the differences between the outputs of the integrators 35, 36, and 37 and the outputs of the integrators 38, 39, and 40
- PWM mode selection signal generator 54 which outputs, based on output voltage amplitude command Ymr and output frequency command Finv, PWM mode selection signal SW and PWM mode switching signal CHG
- Switch 53 which, when the PWM mode switching signal CHG is valid, outputs the outputs of the subtractors 50, 51, and 52 as modulation percentage correction amounts $\Delta$ymu, $\Delta$ymv, and $\Delta$ymw or, when the PWM mode switching signal CHG is invalid, outputs zeros

The PWM mode selection signal generator 54 outputs, according to the output voltage amplitude command Ymr and the output frequency command Finv, the PWM mode selection signal SW for selecting the first PWM mode or the second PWM mode. The region of transition between the two PWM modes includes a hysteresis width so as to prevent switching from either PWM mode and back to the PWM mode in a short period of time. The PWM mode switching signal CHG normally remains invalid and becomes valid only immediately before switching is made from the first PWM mode to the second PWM mode.

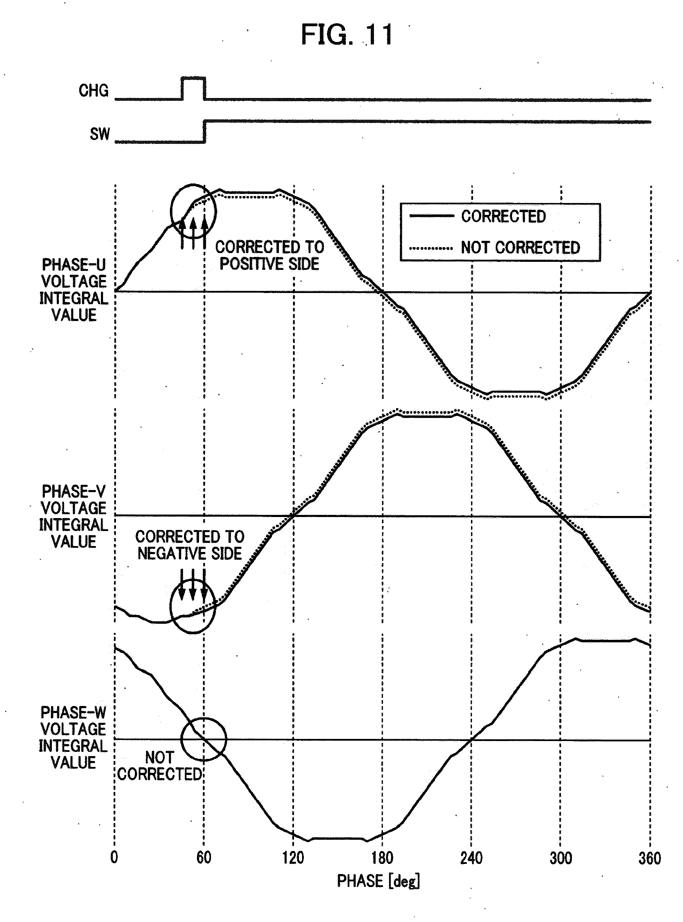

FIG. 11 is a diagram showing operation examples (output voltage integral values) according to the second embodiment of the present invention.

Referring to. FIG. 11, the PWM mode selection signal SW is, before the phase angle reaches 60 degrees, low to be in synchronous PWMI, i.e., in the first PWM mode. At and after the phase angle of 60 degrees, the signal is high to be in synchronous PWMII, i.e., in the second PWM mode.

The PWM mode switching signal CHG is normally low to be invalid, and goes high to become valid only immediately before the phase angle of 60 degrees is reached.

In FIG. 11, voltage integral values in a case where switching is made from synchronous PWMI to synchronous PWMII at a phase angle of 60 degrees are shown in solid lines. For comparison, voltage integral values in a case without the second embodiment of the present invention applied are shown in dotted lines.

When the second embodiment of the present invention is not applied, as shown in FIG. 10, the voltage integral value of phase U is deviated to the negative side and the voltage integral value of phase V is deviated to the positive side. On the other hand, as shown in FIG. 11, in the configuration according to the second embodiment, the voltage integral value of phase U is corrected to the positive side immediately before PWM mode switching at a phase angle of 60 degrees and, thereby, the imbalanced state of the voltage integral value of phase U is cancelled. For phase V, too, the imbalanced state of the voltage integral value of phase V is cancelled by correcting the voltage integral value to the negative side. As for phase W, at the phase angle of 60 degrees, the voltage integral value is in a balanced state, so that no correction is made.

In the second embodiment, voltage integral value correction is made immediately before switching from synchronous PWMI to synchronous PWMII. This is because, in the second embodiment, the number of synchronization pulses is larger in synchronous PWMI than in synchronous PWMII, and correcting voltage integral values in a mode involving more pulses allows voltage integral value control with higher accuracy.

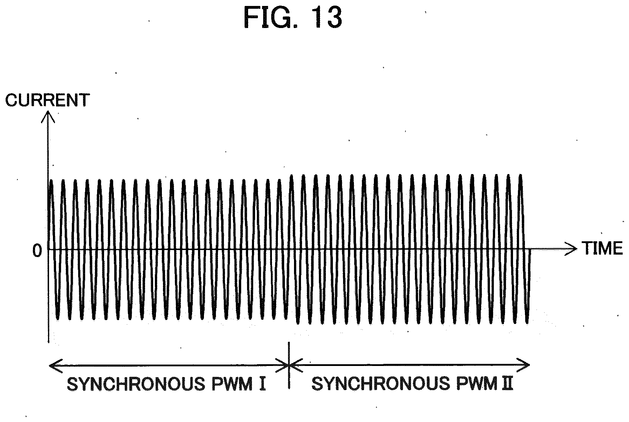

FIG. 13 is a diagram showing a motor current waveform in a case where the present invention is applied. In this case, unlike in the case of the motor current waveform shown in FIG. 8, switching from synchronous PWMI to synchronous PWMII is smooth with no motor-current jumping.

The reason why the current amplitude is larger in synchronous PWMII than in synchronous PWMI is that, with the number of synchronization pulses reduced in synchronous PWMII compared to that in synchronous PWMI, switching rippling is larger in synchronous PWMII.

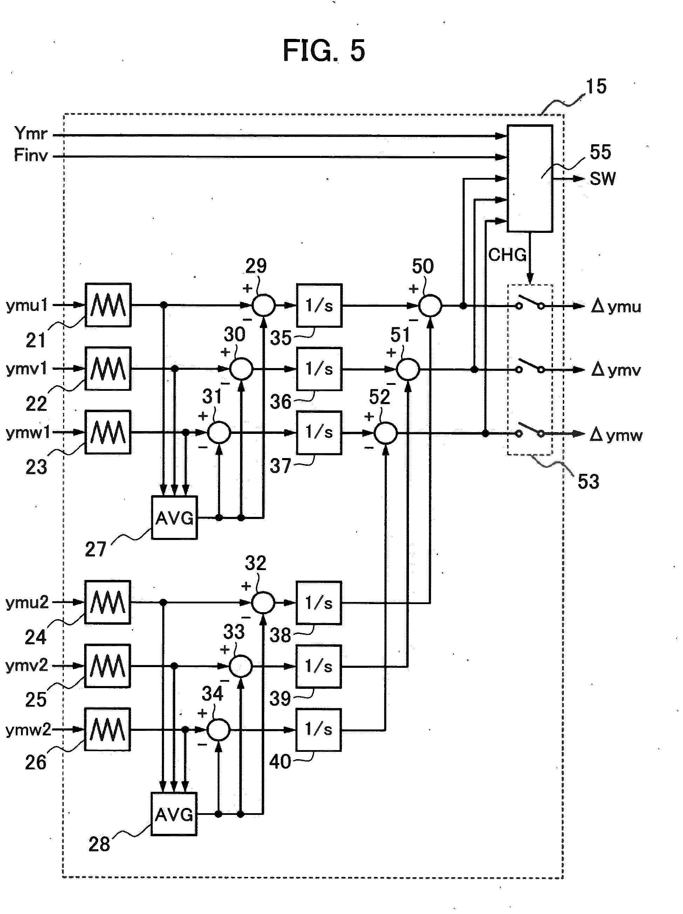

FIG. 5 is a diagram showing another example configuration of the PWM mode selection circuit 15 according to the second embodiment shown in FIG. 3.

The PWM mode selection circuit 15 shown in FIG. 5 differs from the PWM mode selection circuit 15 shown in FIG. 4 in that the PWM mode selection signal generator 55 outputs the PWM mode selection signal SW and the PWM mode switching signal CHG based on three signals, i.e. the output voltage amplitude command Ymr, output frequency command Finv, and outputs of the subtractors 50, 51, and 52.

The PWM mode selection signal generator 55 outputs a signal to select the first PWM mode or the second PWM mode in accordance with the output voltage amplitude command Ymr and the output frequency command Finv. For this, a hysteresis width is provided in the region of transition between the two PWM modes so as to prevent switching from either PWM mode and back to the PWM mode in a short period of time. Furthermore, the PWM mode selection signal SW is switched only when, out of the outputs of the subtractors 50, 51, and 52, the output for one phase is either 0 or in an allowable range in which the output can be regarded as zero. The PWM mode switching signal CHG normally remains invalid and becomes valid only immediately before switching is made from the first PWM mode to the second PWM mode.

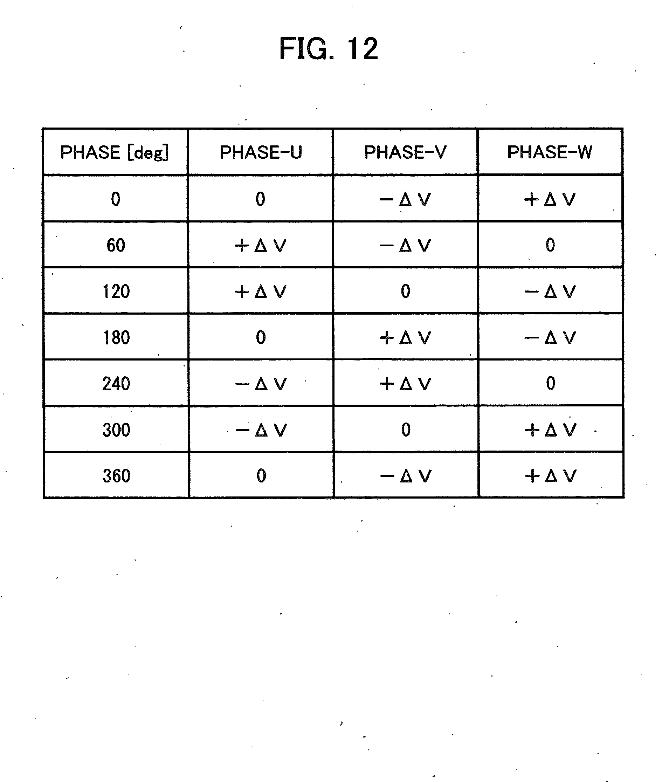

FIG. 12 is a table listing the modulation percentage correction amounts for each phase.

As shown in FIG. 9, of the voltage integral values of the three phases, the voltage integral value of one phase inevitably crosses the zero value level at each phase of an integer multiple of 60 degrees. At that time, the voltage integral values of the other two phases always total zero, since the total of the voltage integral values of the three phases is always zero. This applies before and after any PWM mode switching, too. Therefore, among the modulation percentage correction amounts, each representing a difference between voltage integral values, too, the correction amount for one phase is zero and the total for the other two phases is also inevitably zero. The modulation percentage correction amounts are represented as $+\Delta V$ and $-\Delta V$.

As shown in FIG. 12, at the phase angle of 60 degrees, for example, the modulation percentage correction amount is zero for phase W, $+\Delta V$ for phase U, and $-\Delta V$ for phase V. Thus, when the phase angle is an integer multiple of 60 degrees, the modulation percentage correction amount is zero or $+\Delta V$ or $-\Delta V$.

Referring also to FIG. 9, the voltage integral value of phase U is zero when the phase angle is 0 degree, and the voltage integral-value difference between the two PWM modes at the phase angle of 60 degrees represents the modulation percentage correction amount $\Delta V$. This indicates that, in the voltage integral value calculation, integration need not be carried out indefinitely and that integration is only required to be carried out from a zero state every 60 degrees. When the integrators are continuously operated for a prolonged time, even very small calculation errors may accumulate to lead to an imbalanced state. The present invention according to which the integrators are reset every 60 degrees can remove such a problem.

LIST OF REFERENCE SIGNS

1, 2, 3 Modulated wave generation circuits for first PWM mode
4, 5, 6 Modulated wave generation circuits for second PWM mode
7 Pulse switching circuit (selector)
8, 9, 10 Pulse generation circuits for first PWM mode
11, 12, 13 Pulse generation circuits for second PWM mode
14, 15 PWM mode selection circuits
16, 17, 18 Adders
21, 22, 23 PWM waveform calculators for first PWM mode
24, 25, 26 PWM waveform calculators for second PWM mode
27, 28 Average calculators
29, 30, 31, 32, 33, 34 Subtractors
35, 36, 37, 38, 39, 40 Integrators
41, 42, 43 Comparators
44 Logical product (AND) gate
45 PWM mode selection signal generator
50, 51, 52 Adders
53 Switch
54, 55 PWM mode selection signal generators
81 Smoothing capacitor
82, 84, 86 Upper-arm semiconductor switching elements of three-phase bridge
83, 85, 87 Lower-arm semiconductor switching elements of three-phase bridge
88 Motor (AC motor)
90, 91, 92 Resistance R
93, 94, 95 Inductance L
96, 97, 98 Power supplies equivalent to speed electromotive forces

**Claims**

1. A PWM inverter control device comprising:

   a modulated wave generation circuit which generates, based on an output voltage phase command and an output voltage amplitude command for a PWM inverter, a first modulated wave corresponding to a first PWM mode and a second modulated wave corresponding to a second PWM mode;

a first pulse generation circuit which generates a first PWM pulse by comparing the first modulated wave and a carrier wave corresponding to the first PWM mode;

a second pulse generation circuit which generates a second PWM pulse by comparing the second modulated wave and a carrier wave corresponding to the second PWM mode;

a PWM mode selection circuit which generates a PWM mode selection signal for selecting, based on an output frequency command and the output voltage amplitude command for the PWM inverter, one of the first PWM mode and the second PWM mode; and

a pulse switching circuit which makes switching, according to the PWM mode selection signal, between the first PWM pulse and the second PWM pulse for output as a PWM inverter drive pulse,

wherein the PWM mode selection circuit generates the PWM mode selection signal at timing when an output voltage integral value of the PWM inverter in a case where the first PWM pulse is used as the drive pulse and an output voltage integral value of the PWM inverter in a case where the second PWM pulse is used as the drive pulse match.

2. A PWM inverter control device comprising:

a modulated wave generation circuit which generates, based on an output voltage phase command and an output voltage amplitude command for a PWM inverter, a first modulated wave corresponding to a first PWM mode and a second modulated wave corresponding to a second PWM mode;

a first pulse generation circuit which generates a first PWM pulse by comparing the first modulated wave and a carrier wave corresponding to the first PWM mode;

a second pulse generation circuit which generates a second PWM pulse by comparing the second modulated wave and a carrier wave corresponding to the second PWM mode;

a PWM mode selection circuit which generates a PWM mode selection signal for selecting, based on an output frequency command and the output voltage amplitude command for the PWM inverter, one of the first PWM mode and the second PWM mode; and

a pulse switching circuit which makes switching, according to the PWM mode selection signal, between the first PWM pulse and the second PWM pulse for output as a drive pulse for the PWM inverter,

wherein the PWM mode selection circuit:

comprises a first calculator which calculates a first PWM waveform based on the first modulated wave and integrates the first PWM waveform and a second calculator which calculates a second PWM waveform based on the second modulated wave and integrates the second PWM waveform; and

generates the PWM mode selection signal at timing when an output of the first calculator and an output of the second calculator match.

3. The PWM inverter control device according to claim 2,

wherein the PWM inverter is a three-phase PWM inverter,

wherein the first and the second modulated waves are respectively for three phases,

wherein the first calculators obtain, from the first modulated waves, PWM waveforms for the three phases and, by subtracting an average value of the PWM waveforms for the three phases from each of the PWM waveforms for the three phases, calculate the first PWM waveforms,

wherein the second calculators obtain, from the second modulated waves, PWM waveforms for the three phases and, by subtracting an average value of the PWM waveforms for the three phases from each of the PWM waveforms for the three phases, calculate the second PWM waveforms, and

wherein the PWM mode selection signal is generated at timing when outputs for the three phases of the first calculators and outputs for the three phases of the second calculators either match for every one of the three phases or differ in an allowable range.

4. A PWM inverter control device comprising:

a modulated wave generation circuit which generates, based on an output voltage phase command and an output voltage amplitude command for a PWM inverter, a first modulated wave corresponding to a first PWM mode and a second modulated wave corresponding to a second PWM mode;

a first pulse generation circuit which generates a first PWM pulse, by comparing the first modulated wave to which a modulation percentage correction amount is added at predetermined timing with a carrier wave corresponding to the first PWM mode;

a second pulse generation circuit which generates a second PWM pulse, by comparing the second modulated wave with a carrier wave corresponding to the second PWM mode;

a PWM mode selection circuit which generates a PWM mode selection signal for selecting, based on an output frequency command and the output voltage amplitude command for the PWM inverter, one of the first PWM mode and the second PWM mode and which generates the modulation percentage correction amount; and

a pulse switching circuit which makes switching, according to the PWM mode selection signal, between the first PWM pulse and the second PWM pulse for output as a PWM inverter drive pulse,

wherein the PWM mode selection circuit:

comprises a first calculator which calculates a first PWM waveform based on the first modulated wave and integrates the first PWM waveform, a second calculator which calculates a second PWM waveform based on the second modulated wave and integrates the second PWM waveform, and a third calculator which outputs the modulation percentage correction amount corresponding to a difference between an output of the first calculator and an output of the second calculator; and

wherein the predetermined timing is a timing immediately before switching made between the first PWM mode and the second PWM mode according to the PWM mode selection signal.

5. The PWM inverter control device according to claim 4,

wherein the PWM inverter is a three-phase PWM inverter,

wherein the first and the second modulated waves are respectively for three phases,

wherein the first calculators obtain, from the first modulated waves, PWM waveforms for the three phases and, by subtracting an average value of the PWM waveforms for the three phases from each of the PWM waveforms for the three phases, calculate the first PWM waveforms,

wherein the second calculators obtain, from the second modulated waves, PWM waveforms for the three phases and, by subtracting an average value of the PWM waveforms for the three phases from each of the PWM waveforms for the three phases, calculate the second PWM waveforms, and

wherein the third calculators subtract the outputs for the three phases of the second calculators from the outputs for the three phases of the first calculators, respectively, and output the modulation percentage correction amounts for the three phases, respectively.

6. The PWM inverter control device according to claim 5,

wherein the PWM mode selection circuit generates the PWM mode selection signal when any one of the modulation percentage correction amounts for the three phases is either zero or within an allowable range in which the amount can be regarded as zero.

7. The PWM inverter control device according to one of claims 1 to 6, wherein a region of transition between the first PWM mode and the second PWM mode is provided with a hysteresis width.

8. A PWM inverter control method comprising the steps of:

modulated wave generation in which, based on an output voltage phase command and an output voltage amplitude command for a PWM inverter, a first modulated wave corresponding to a first PWM mode and a second modulated wave corresponding to a second PWM mode are generated;

pulse generation in which a first PWM pulse is generated by comparing the first modulated wave and a carrier wave corresponding to the first PWM mode and in which a second PWM pulse is generated by comparing the second modulated wave and a carrier wave corresponding to the second PWM mode;

PWM mode selection in which a PWM mode selection signal for selecting, based on an output frequency command and the output voltage amplitude command for the PWM inverter, one of the first PWM mode and the second PWM mode is generated at timing when an output voltage integral value of the PWM inverter in a case where the first PWM pulse is used as a drive pulse for the PWM inverter and an output voltage integral value of the PWM inverter in a case where the second PWM pulse is used as a drive pulse for the PWM inverter match; and

driving in which the PWM inverter is driven while switching is made between the first PWM pulse and the second PWM pulse according to the PWM mode selection signal.

9. A PWM inverter control method comprising the steps of:

modulated wave generation in which, based on an output voltage phase command and an output voltage amplitude command for a PWM inverter, a first modulated wave corresponding to a first PWM mode and a second modulated wave corresponding to a second PWM mode are generated;

pulse generation in which a first PWM pulse is generated by comparing the first modulated wave and a carrier wave corresponding to the first PWM mode and in which a second PWM pulse is generated by comparing the second modulated wave and a carrier wave corresponding to the second PWM mode;

PWM mode selection in which a PWM mode selection signal for selecting, based on an output frequency command and the output voltage amplitude command for the PWM inverter, one of the first PWM mode and the second PWM mode is generated; and

driving in which the PWM inverter is driven while switching is made between the first PWM pulse and the second PWM pulse according to the PWM mode selection signal,

wherein the step of PWM mode selection includes:

a calculation step in which a first integral value is calculated by integrating the first PWM waveform calculated based on the first modulated wave and a second integral value is calculated by integrating the second PWM waveform calculated based on the second modulated wave; and

a step in which the PWM mode selection signal is generated at timing when the first integral value and the second integral value match.

10. A PWM inverter control method comprising the steps of:

modulated wave generation in which, based on an output voltage phase command and an output voltage amplitude command for a PWM inverter, a first modulated wave corresponding to a first PWM mode and a second modulated wave corresponding to a second PWM mode are generated;

pulse generation in which a first PWM pulse is generated by comparing the first modulated wave and a carrier wave corresponding to the first PWM mode and in which a second PWM pulse is generated by comparing the second modulated wave and a carrier wave corresponding to the second PWM mode;

PWM mode selection in which a PWM mode selection signal for selecting, based on an output frequency command and the output voltage amplitude command for the PWM inverter, one of the first PWM mode and the second PWM mode is generated;

calculation in which a first integral value is calculated by integrating the first PWM waveform calculated based on the first modulated wave, a second integral value is calculated by integrating the second PWM waveform calculated based on the second modulated wave, a difference between the first integral value and the second integral value is calculated as a modulation percentage correction amount, and the modulation percentage correction amount is added to the first modulated wave at timing immediately before switching is made between the first PWM mode and the second PWM mode according to the PWM mode selection signal; and

driving in which the PWM inverter is driven while switching is made between the first PWM pulse and the second PWM pulse according to the PWM mode selection signal.

## FIG. 1

# FIG. 2

# FIG. 3

# FIG. 4

# FIG. 5

# FIG. 6

# FIG. 7

# FIG. 8

# FIG. 9

# FIG. 10

# FIG. 11

# FIG. 12

| PHASE [deg] | PHASE-U | PHASE-V | PHASE-W |
|:---:|:---:|:---:|:---:|
| 0 | 0 | $-\Delta V$ | $+\Delta V$ |
| 60 | $+\Delta V$ | $-\Delta V$ | 0 |
| 120 | $+\Delta V$ | 0 | $-\Delta V$ |
| 180 | 0 | $+\Delta V$ | $-\Delta V$ |
| 240 | $-\Delta V$ | $+\Delta V$ | 0 |
| 300 | $-\Delta V$ | 0 | $+\Delta V$ |
| 360 | 0 | $-\Delta V$ | $+\Delta V$ |

# FIG. 13

CURRENT

0 ————————————————————————————————→ TIME

←———— SYNCHRONOUS PWM I ————|———— SYNCHRONOUS PWM II ————→

# EP 4 071 998 A1

<table>
<tr><td colspan="2" style="text-align:center"><b>INTERNATIONAL SEARCH REPORT</b></td><td>International application No.<br>PCT/JP2020/044777</td></tr>
</table>

**A. CLASSIFICATION OF SUBJECT MATTER**
H02M 7/48(2007.01)i
FI: H02M7/48 F

According to International Patent Classification (IPC) or to both national classification and IPC

**B. FIELDS SEARCHED**

Minimum documentation searched (classification system followed by classification symbols)
H02M7/48

Documentation searched other than minimum documentation to the extent that such documents are included in the fields searched

| | |
|---|---|
| Published examined utility model applications of Japan | 1922-1996 |
| Published unexamined utility model applications of Japan | 1971-2021 |
| Registered utility model specifications of Japan | 1996-2021 |
| Published registered utility model applications of Japan | 1994-2021 |

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| A | JP 10-337036 A (HITACHI, LTD.) 18 December 1998 (1998-12-18) entire text, all drawings | 1-10 |
| A | JP 2017-50977 A (MITSUBISHI ELECTRIC CORP.) 09 March 2017 (2017-03-09) entire text, all drawings | 1-10 |
| A | WO 2014/174597 A1 (MITSUBISHI ELECTRIC CORP.) 30 October 2014 (2014-10-30) entire text, all drawings | 1-10 |
| A | JP 2005-348597 A (HITACHI, LTD.) 15 December 2005 (2005-12-15) entire text, all drawings | 1-10 |
| A | JP 2019-103267 A (HITACHI AUTOMOTIVE SYSTEMS, LTD.) 24 June 2019 (2019-06-24) entire text, all drawings | 1-10 |
| A | JP 9-247953 A (TOSHIBA CORP.) 19 September 1997 (1997-09-19) entire text, all drawings | 1-10 |

☒ Further documents are listed in the continuation of Box C.    ☒ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search<br>03 February 2021 (03.02.2021) | Date of mailing of the international search report<br>16 February 2021 (16.02.2021) |
|---|---|
| Name and mailing address of the ISA/<br>Japan Patent Office<br>3-4-3, Kasumigaseki, Chiyoda-ku,<br>Tokyo 100-8915, Japan | Authorized officer<br><br>Telephone No. |

Form PCT/ISA/210 (second sheet) (January 2015)

**INTERNATIONAL SEARCH REPORT**

International application No.

PCT/JP2020/044777

C (Continuation).   DOCUMENTS CONSIDERED TO BE RELEVANT

| Category* | Citation of document, with indication, where appropriate, of the relevant passages | Relevant to claim No. |
|---|---|---|
| A | JP 8-331856 A (TOSHIBA CORP.) 13 December 1996 (1996-12-13) entire text, all drawings | 1-10 |

Form PCT/ISA/210 (continuation of second sheet) (January 2015)

**INTERNATIONAL SEARCH REPORT**

Information on patent family members

| International application No. |
|---|
| PCT/JP2020/044777 |

| Patent Documents referred in the Report | Publication Date | Patent Family | Publication Date |
|---|---|---|---|
| JP 10-337036 A | 18 Dec. 1998 | (Family: none) | |
| JP 2017-50977 A | 09 Mar. 2017 | (Family: none) | |
| WO 2014/174597 A1 | 30 Oct. 2014 | US 2016/0072424 A1 entire text, all drawings | |
| JP 2005-348597 A | 15 Dec. 2005 | US 5680299 A entire text, all drawings JP 2000-152639 A JP 2002-125378 A JP 2003-125597 A JP 2005-13 7200 A JP 2005-176600 A JP 2005-237194 A JP 2006-230195 A JP 7-227085 A EP 658969 A2 CN 1108443 A | |
| JP 2019-103267 A | 24 Jun. 2019 | WO 2019/111776 A1 | |
| JP 9-247953 A | 19 Sep. 1997 | (Family: none) | |
| JP 8-331856 A | 13 Dec. 1996 | (Family: none) | |

Form PCT/ISA/210 (patent family annex) (January 2015)

28

**EP 4 071 998 A1**

## REFERENCES CITED IN THE DESCRIPTION

**Patent documents cited in the description**

- JP HEI91997247953 A